# FASCICULE DE BREVET EUROPEEN

(11) **EP 3 060 384 B1**
(45) Date de publication et mention de la délivrance du brevet: **04.10.2017**
(21) Numéro de dépôt: 14805978.5
(22) Date de dépôt: 22.10.2014
(51) Int. Cl.: B29B 11/16, B29C 70/24, B29C 70/48, B29C 70/54, F01D 25/28, B29C 69/00, B29C 53/02, B29C 53/04, C04B 35/80, D03D 3/02, F01D 9/02, F01D 9/04, F01D 25/00, B29L 31/08

(54) **PREFORME FIBREUSE POUR AUBE CREUSE DE TURBOMACHINE**
FASERVORFORMLING FÜR EINE TURBOMASCHINEN-HOHLSCHAUFEL
FIBROUS PREFORM FOR TURBOMACHINE HOLLOW BLADE

(30) Priorité: 23.10.2013 FR 1360339
(43) Date de publication de la demande: 31.08.2016
(73) Titulaire: SNECMA, 75015 Paris (FR); SAFRAN, 75015 Paris (FR)
(72) Inventeur: PODGORSKI, Michaël, F-77550 Moissy-Cramayel Cedex (FR); COUPE, Dominique, 77310 Saint-Fargeau-Ponthierry (FR); DAMBRINE, Bruno, F-77550 Moissy-Cramayel Cedex (FR); LE HONG, Son, F-77550 Moissy-Cramayel Cedex (FR); MOLLIEX, Ludovic, F-77550 Moissy-Cramayel Cedex (FR)
(74) Mandataire: Joanny, Damien Henri Xavier
(86) Numéro de dépôt international: PCT/FR2014/052687
(87) Numéro de publication internationale: WO 2015/059409

(56) Documents cités:
- EP-A1- 1 777 063
- WO-A1-2013/079860
- FR-A1- 2 940 173
- FR-A1- 2 985 928

## Description

### DOMAINE DE L'INVENTION

Le présent exposé concerne une préforme fibreuse pour une aube creuse de turbomachine, une telle aube creuse, ainsi qu'un procédé de fabrication d'une telle aube creuse. Il concerne également une turbomachine et un aéronef comprenant une telle aube creuse.

Une telle préforme peut être utilisée pour fabriquer une aube creuse de redresseur arrière de turbine par exemple ou d'autres modules d'une turbomachine.

### ETAT DE LA TECHNIQUE ANTERIEURE

En raison des prix élevés des carburants, des efforts importants sont aujourd'hui menés pour réduire la consommation des turboréacteurs d'aéronefs. Un facteur majeur influant sur leur consommation est la masse de l'aéronef et de ses équipements dont font partie les turboréacteurs eux-mêmes,

Ainsi, depuis quelque années, de nouveaux matériaux ont fait leur apparition dans les turboréacteurs d'aéronef et ont permis d'obtenir d'importantes réductions de masse. C'est notamment le cas des matériaux composites qui offrent à la fois une bonne résistance mécanique et une masse réduite par rapport aux matériaux métalliques traditionnellement utilisés : les nouvelles générations de turboréacteurs comportent ainsi un grand nombre de pièces réalisées en de tels matériaux composites.

Une autre voie pour obtenir des réductions de masse vise à simplifier la géométrie de certaines pièces ou à supprimer certains éléments superflus. En particulier, il est possible d'évider certaines pièces qui étaient traditionnellement massives. C'est notamment le cas de certaines aubes, notamment celles du redresseur arrière de turbine, qui sont creuses dans les nouvelles générations de turbomachines.

Dès lors, il serait théoriquement possible de cumuler les avantages apportés par ces deux méthodes de réduction de masse en réalisant de telles aubes creuses en matériaux composites. Toutefois, les méthodes de fabrication de pièces creuses en composites sont rares, complexes est peu satisfaisantes.

En particulier, une méthode connue consiste à tisser une pluralité de tissus bidimensionnels, à les mettre en forme en les empilant, puis à les solidariser par cofrittage. Toutefois, cette méthode nécessite de tisser un grand nombre de tissus, pose des difficultés lors de la mise en forme conjointe des tissus de l'empilement, et aboutit à des pièces souffrant de faiblesses structurales causées par leur structure stratifiée.

On connaît également le procédé proposé par le document WO2013/079860, qui divulgue une préforme selon le préambule de la revendication 1. Il existe donc un réel besoin pour une préforme fibreuse pour une aube creuse de turbomachine, une telle aube creuse, ainsi qu'un procédé de fabrication d'une telle aube creuse, qui soient dépourvus, au moins en partie, des inconvénients inhérents aux procédés connus précités.

### PRESENTATION DE L'INVENTION

Le présent exposé concerne une préforme fibreuse pour une aube creuse de turbomachine, selon la revendication 1. Grâce à cette préforme, il est possible d'obtenir une aube creuse particulièrement légère en raison de son creux et de l'emploi de matériaux composites.

En outre, grâce à ce tissage tridimensionnel, une telle aube creuse possède une structure monobloc présentant de très bonnes propriétés mécaniques. L'anisotropie d'une telle pièce est de plus réduite, ce qui lui confère une grande résistance mécanique quelle que soit la direction des contraintes exercées. En particulier, son réseau tridimensionnel de fibres lui permet de résister aux efforts de cisaillement sans risque de délamination contrairement aux empilements de tissus cofrittés par exemple.

Grâce à cette préforme, le procédé de fabrication de telles aubes creuses est également simplifié. Ce dernier peut en effet ne comprendre qu'une seule étape de tissage réalisée à l'aide d'un métier à tisser tridimensionnel aujourd'hui bien connu dans le domaine, ce qui réduit le coût global et le temps nécessaire pour la fabrication d'une telle aube creuse. Le cas échéant, il permet de plus d'intégrer à cette préforme, lors de cette même et unique étape de tissage, d'autres éléments de l'environnement telles des plates-formes ou des brides de fixation qui seront dès lors formées de manière monobloc avec l'aube creuse.

De préférence, les premières zones de liaison s'étendent tout le long du bord avant de leur portion longitudinale principale respective, et les deuxièmes zones de liaison s'étendent tout le long du bord arrière de leur portion longitudinale principale respective.

Dans le présent exposé, les termes « longitudinal », « transversal », « inférieur », « supérieur » et leurs dérivés sont définis par rapport à la direction principale des aubes ; de plus, lorsqu'ils concernent la préforme, ils sont définis par rapport à la préforme mise en forme ; les termes « axial », « radial », « tangentiel », « intérieur », « extérieur » et leurs dérivés sont quant à eux définis par rapport à l'axe principal de la turbomachine ; enfin, les termes « amont » et « aval » sont définis par rapport à la circulation de l'air dans la turbomachine.

Dans certains modes de réalisation, les premières zones de liaison des première et deuxième structures fibreuses sont tissées conjointement de manière liée et/ou les deuxièmes zones de liaison des première et deuxième structures fibreuses sont tissées conjointement de manière liée, et les portions longitudinales principales des première et deuxième structures fibreuses sont tissées conjointement de manière déliée. De cette manière, la préforme, et donc l'aube creuse obtenue, bénéficient d'un réseau tridimensionnel de fibres cohérent y compris au niveau des zones de liaison : ceci permet d'améliorer la tenue mécanique de ces zones de liaison et donc des bords d'attaque et de fuite de l'aube qui en résulteront.

Dans certains modes de réalisation, un croisement de couche est réalisé au niveau des premières zones de liaison des première et deuxième structures fibreuses et/ou au niveau des deuxièmes zones de liaison des première et deuxième structures fibreuses. Ceci améliore encore la cohésion des premières et deuxièmes structures fibreuses.

Dans d'autres modes de réalisation, les premières zones de liaison des première et deuxième structures fibreuses sont tissées de manière déliée et sont cousues l'une à l'autre et/ou les deuxièmes zones de liaison des première et deuxième structures fibreuses sont tissées de manière déliée et sont cousues l'une à l'autre.

Dans d'autres modes de réalisation, les premières zones de liaison des première et deuxième structures fibreuses sont tissées de manière déliée et sont collées l'une à l'autre et/ou les deuxièmes zones de liaison des première et deuxième structures fibreuses sont tissées de manière déliée et sont collées l'une à l'autre. Conformément à l'invention, au moins l'une des structures fibreuses comprend en outre au moins une portion radiale, s'étendant depuis le bord inférieur ou supérieur de sa portion longitudinale principale, apte à former une plate-forme ou une bride de fixation. Comme cela a été évoqué plus haut, ceci permet de réaliser une plate-forme ou une bride de fixation de manière monobloc, et au cours d'une même étape, avec l'aube creuse. La tenue mécanique de l'ensemble, et notamment de l'interface entre l'aube et la plate-forme ou la bride est donc améliorée. En outre, ceci permet de réduire le nombre de pièces nécessaires, notamment de fixation, ce qui réduit la masse et le coût de l'ensemble.

Dans certains modes de réalisation, ladite portion radiale s'étend tout le long dudit bord inférieur ou supérieur de ladite portion longitudinale principale.

Dans certains modes de réalisation, au moins ladite structure fibreuse comprend en outre au moins une portion longitudinale secondaire, s'étendant depuis un bord de ladite portion radiale, apte à former une bride de fixation, Conformément à l'invention, au moins l'une des structures fibreuses comprend une portion débordante qui, lorsque la structure fibreuse est à plat, se situe en avant d'au moins une partie de la première zone de liaison de ladite structure fibreuse ou en arrière d'au moins une partie de la deuxième zone de liaison de ladite structure fibreuse, un espace étant laissé entre ladite portion débordante et la zone de liaison considérée. Cet espace peut être découpé dans les structures fibreuses telles qu'elles sont obtenues à l'issue du tissage. Ceci permet de réaliser une portion de plate-forme ou de bride qui dépasse le plan de corde de l'aube creuse. Il est ainsi également possible de réaliser des zones de chevauchement dans lesquelles les deux structures fibreuses, une fois mises en forme, se recouvrent l'une l'autre, ce qui permet une meilleure cohérence et une meilleure tenue de la plate-forme ou de la bride de fixation complète finale.

Dans certains modes de réalisation, la première et/ou deuxième portion de liaison possède une largeur plus faible au niveau de sa base et/ou de son sommet qu'au niveau de son milieu, Une largeur plus faible au niveau de la base ou du sommet permet de limiter l'importance de l'usinage qui sera nécessaire dans cette zone de la pièce ; cette dernière étant sensible en raison de la jonction du bord d'attaque ou de fuite de l'aube avec la plate-forme. Une largeur plus importante est en revanche possible au milieu des zones de liaison pour obtenir une tenue élevée car cette zone est moins contrainte.

Dans certains modes de réalisation, les fils utilisés pour le tissage de la préforme sont des fibres du type oxyde, de préférence des fibres en en alumine, mullite, silice ou zircone. Il peut toutefois s'agir de n'importe quel autre type de fil, par exemple des fibres de carbone, de verre ou de kevlar.

Dans certains modes de réalisation, l'armure utilisée pour le tissage tridimensionnel de la préforme peut être du type interlock 3D. Toutefois, le tissage des surfaces externes de la préforme peut être essentiellement tridimensionnel, du type satin par exemple.

Le présent exposé concerne également une aube creuse, réalisée de manière monobloc en matériau composite à partir d'une préforme fibreuse selon l'un quelconque des modes de réalisation précédents, ladite préforme ayant été mise en forme dans un moule et noyée dans une matrice.

Dans certains modes de réalisation, l'aube creuse est une aube de redresseur arrière de turbine (« Turbine Rear Vane » - TRV).

Dans d'autres modes de récusation, l'aube creuse est une aube de distributeur.

Dans certains modes de réalisation, la matrice est du type oxyde. Il s'agit de préférence d'une matrice en alumine, mullite, silice ou zircone, de préférence poreuse. Toutefois, il peut également s'agir d'une matrice céramique ou organique.

Le présent exposé concerne en outre une turbomachine, comprenant une aube creuse selon l'un des modes de réalisation précédent

Le présent exposé concerne également un aéronef, comprenant une turbomachine selon le présent exposé.

Le présent exposé concerne enfin un procédé de fabrication d'une aube creuse, selon la revendication 7. Ce procédé permet d'obtenir une pièce brute ayant essentiellement la géométrie de la pièce finale souhaitée, comprenant éventuellement des parties de plate-forme ou de bride, à l'exception d'excroissances amont et aval formées par les extrémités des portions de liaison de la préforme : ces dernières sont alors usinées pour obtenir les bords d'attaque et de fuite souhaités pour la pièce finale.

Dans certains modes de mise en oeuvre, l'aube creuse est obtenue à partir de la préforme à l'aide d'un procédé du type RTM (« Resin Transfert Molding ») connu dans le métier.

Dans d'autres modes de mise en oeuvre, l'aube creuse est obtenue à partir de la préforme à l'aide d'un procédé du type Polyflex. Selon un tel procédé, une préforme fibreuse est positionnée sur un outillage comportant une surface ayant le profil désiré du produit final. La préforme est ensuite couverte par une membrane imperméable flexible et de la résine est injectée entre la membrane et la préforme. De l'autre côté de la membrane, une pression isostatique est exercée sur la membrane par un fluide, Ce fluide force la résine entre les fibres et maintient une pression durant la phase de la cuisson de la résine.

Dans certains modes de mise en oeuvre, au cours de l'étape de mise en forme, la deuxième structure fibreuse est fléchie de manière à présenter entre ses deuxième et première zones de liaison au moins une première courbure concave, apte à former la partie aval de l'intrados de l'aube, suivie d'une courbure convexe, apte à former la partie amont de l'intrados de l'aube, suivie elle-même d'une deuxième courbure concave permettant de rejoindre la première structure fibreuse au niveau de la première zone de liaison, une portion distale de la première zone de liaison s'étendant alors du côté extrados du plan de corde défini par les bords d'attaque et de fuite de la pièce finale souhaitée. Cette configuration permet d'allonger la longueur de l'extrados et de réduire celle de l'intrados, ce qui permet d'augmenter la cambrure de l'aube et donc son efficacité.

Dans certains modes de mise en oeuvre, ladite portion distale de la première zone de liaison s'étend dans un plan formant un angle avec le plan de corde compris entre 5 et 30°.

Dans certains modes de mise en oeuvre, la deuxième structure fibreuse est fléchie de telle sorte que le point d'inflexion entre la courbure convexe et la deuxième courbure concave se situe du côté intrados du plan de corde. Ceci facilite le démoulage de la pièce brute du côté intrados en évitant de former une contre-dépouille.

Dans certains modes de mise en oeuvre, la tangente au niveau de ce point d'inflexion est perpendiculaire au plan de corde.

Dans certains modes de mise en oeuvre, l'étape d'usinage de la première partie de liaison de la pièce brute, correspondant à la première portion de raison de la préforme fibreuses, comprend la découpe de la portion distale de la première partie de liaison et le lissage du bord d'attaque et de la paroi extrados.

Dans certains modes de mise en oeuvre, l'étape d'usinage de la deuxième partie de liaison de la pièce brute, correspondant à la deuxième portion de liaison de la préforme fibreuse, comprend essentiellement un affinage de ladite deuxième partie de liaison pour obtenir le bord de fuite.

Les caractéristiques et avantages précités, ainsi que d'autres, apparaîtront à la lecture de la description détaillée qui suit d'exemples de réalisation de la préforme et du procédé proposés. Cette description détaillée fait référence aux dessins annexés.

### BREVE DESCRIPTION DES DESSINS

Les dessins annexés sont schématiques et visent avant tout à illustrer les principes de l'invention.
La FIG 1 est un plan en coupe d'une turbomachine selon l'invention.
La FIG 2 est une vue en perspective d'un redresseur arrière de turbine.
La FIG 3 est une vue en coupe d'une aube creuse.
Les FIG 4A et 4B sont des vues de dessus et en coupe d'un exemple de préforme à l'issue du tissage.
Les FIG 5A et 5B sont des vues de la première structure fibreuse de la préforme à plat et après sa mise en forme.
La FIG 6A est une vue de détail du bord d'attaque de la préforme après sa mise en forme.
La FIG 6B est une vue de détail du bord de fuite de la préforme après sa mise en forme.
La FIG 7 est une vue en perspective de la pièce brute obtenue à partir de la préforme.
La FIG 8 est une vue en perspective de l'aube creuse finale obtenue après usinage de la pièce brute.

### DESCRIPTION DETAILLEE D'EXEMPLE(S) DE REALISATION

Afin de rendre plus concrète l'invention, un exemple de préforme et de procédé de fabrication est décrit en détail ci-après, en référence aux dessins annexés. Il est rappelé que l'invention ne se limite pas à cet exemple.

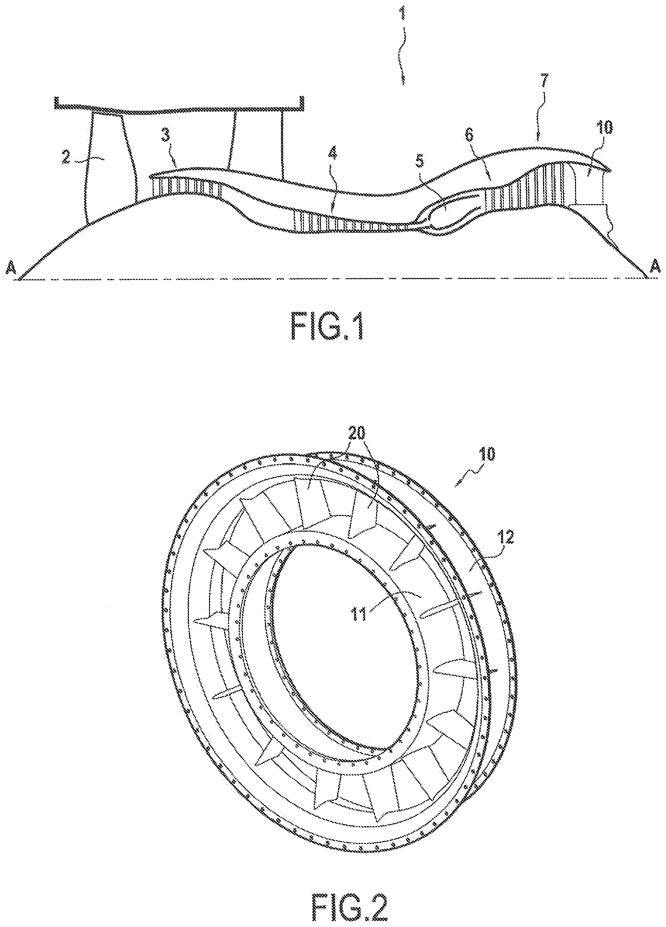

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7. Il comprend en outre à son extrémité aval un redresseur arrière de turbine 10 qui s'interpose dans la veine d'air primaire à la sortie de la turbine basse pression 7.

La FIG 2 représente en perspective un tel redresseur arrière de turbine 10. Ce dernier comporte un moyeu intérieur 11 et une virole extérieure 12 reliés radialement par des aubes de redresseur 20, communément appelées aubes TRV (pour « turbine rear vane »).

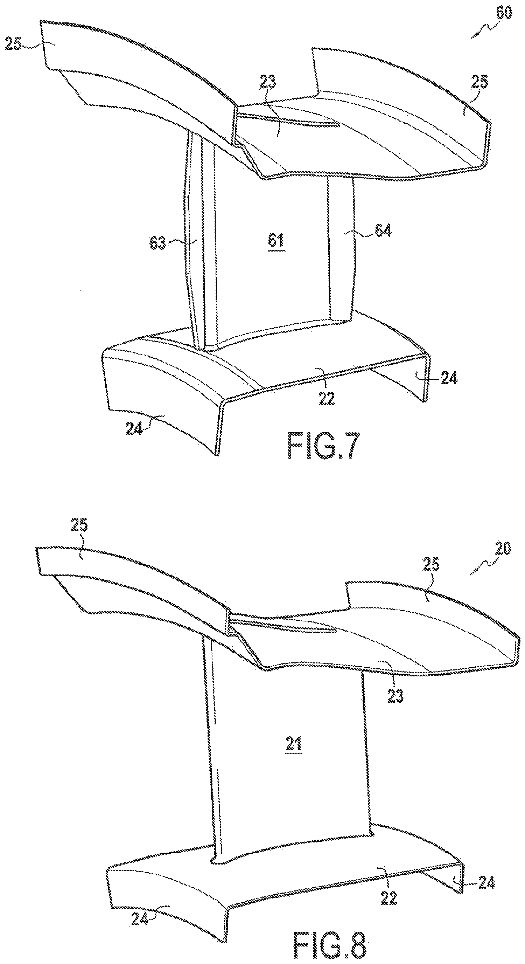

La FIG 8 représente en perspective un exemple d'aube 20, en l'espèce une aube TRV, selon la présente invention. Une telle aube comprend une pale 21, une plate-forme inférieure 22, une plate-forme supérieure 23 et des brides de fixation inférieure 24 et supérieure 25. La partie de pale 22 assure principalement la fonction aérodynamique de l'aube 20 ; les plates-formes 22 et 23 permettent de constituer des parois intérieure et extérieure de veine lisses et aérodynamiques ; les brides de fixations 24 et 25 assurent quant à elles la fixation de l'aube 20 sur le moyen intérieur 11 et la virole extérieure 12, respectivement.

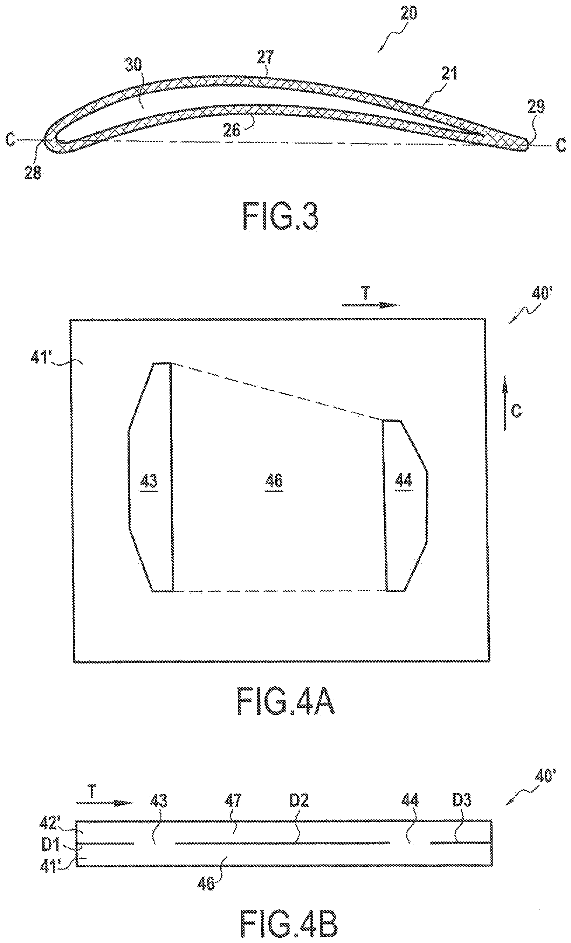

La pale 21 d'une telle aube TRV 20 est représentée en coupe sur la FIG 3. Elle comprend une paroi intrados 26 et une paroi extrados 27 se rejoignant en amont au niveau d'un bord d'attaque 28 et en aval au niveau d'un bord de fuite 29 : ces parois intrados 26 et extrados 27 définissent intérieurement un évidement 30 formant un creux de pale. Dans cet exemple, ce creux de pale 30 est destiné à rester vide dans le but de réduire la masse du redresseur. Toutefois, dans d'autres exemples, notamment pour d'autres types de pièces, un tel creux de pale peut permettre le passage de servitudes. On note en outre que les bords d'attaque 28 et de fuite 29 permettent de définir un plan de corde C.

Les FIG 4A et 4B représentent schématiquement, à l'issue du tissage, une préforme fibreuse 40' permettant d'obtenir une telle aube 20. Sur ces figures, la direction de tissage trame est représentée par la flèche T, c'est-à-dire de gauche à droite des figures, tandis que la direction chaîne est représentée par la flèche C. Toutefois, il va de soi que le tissage pourrait être réalisé à partir de l'autre extrémité et dans l'autre sens, tout comme il serait également possible de tisser dans un sens perpendiculaire à la flèche T depuis le bord supérieur ou inférieur de la préforme 40'.

Dans cet exemple de réalisation, la préforme 40' est tissée tridimensionneilement à l'aide de fibres d'alumine selon une armure interlock 3D.

Cette préforme 40' comprend essentiellement deux structures fibreuses 41' et 42' formant sensiblement deux rectangles de tissus tridimensionnels possédant un nombre constant et identique de couches de fils. Ces deux structures fibreuses 4.1' et 42' sont tissées conjointement de manière déliée sur la majeure partie de leur surface ; toutefois, les première et deuxième structures fibreuses 41' et 42' sont tissées conjointement de manière liée dans une première zone de liaison 43, formant une portion de liaison amont, et une deuxième zone de liaison 44, formant une portion de liaison aval. Des méthodes de tissage permettant une telle déliaison sont désormais bien connues dans le domaine du tissage 3D.

Ainsi, comme cela est visible sur la FIG 4B, une coupe longitudinale de la préforme 40' révèle, dans la direction de tissage T, une surface de déliaison amont D1, la première zone de liaison 43, une surface de déliaison interne D2, la deuxième zone de liaison 44 et une surface de déliaison aval D3. Il est toutefois clair sur la FIG 4A que ces surfaces de déliaison D1, D2 et D3 sont en réalité connexes, ces dernières se rejoignant au-dessus et au-dessous des zones de liaison 43 et 44.

Comme cela est apparent sur ces figures, chaque structure fibreuse 41' et 42' comprend une portion longitudinale principale 46, 47 s'étendant entre les zones de liaisons 42 et 43 et séparée transversalement de son homologue par la surface de dé liaison interne D2 : on comprend ainsi que les portions longitudinales principales 46 et 47 permettront de former les parois intrados 26 et extrados 27 de la pale 21 et que la surface de déliaison interne D2 permettra de former le creux de paie 30,

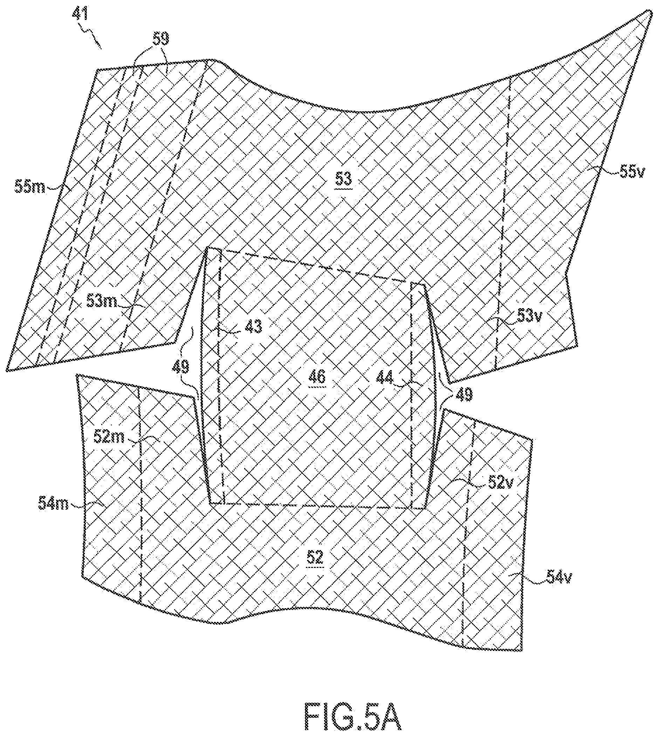

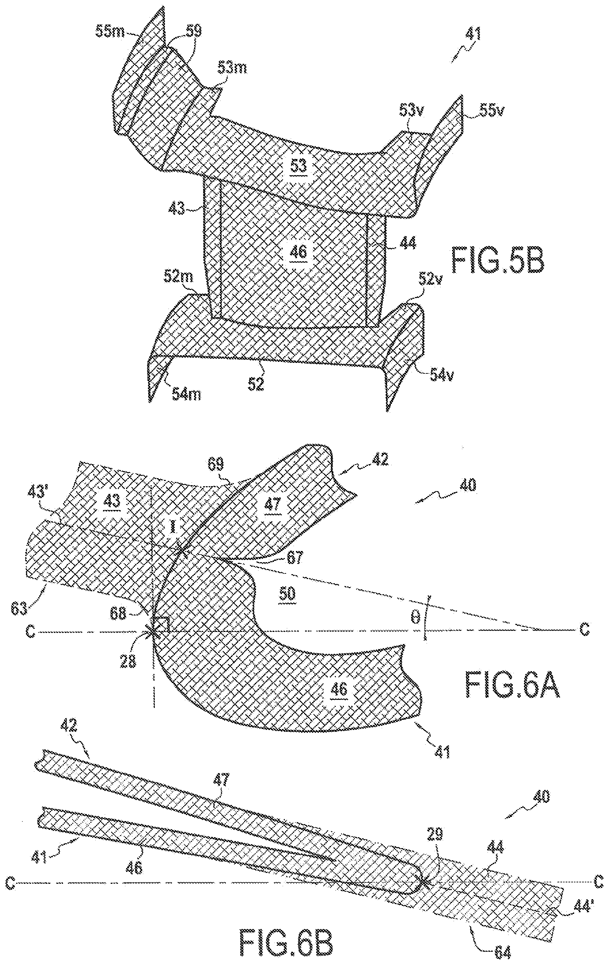

La FIG 5A représente à plat la préforme 40 après son découpage. La FIG 5B représente la même préforme 40 après sa mise en forme. Sur ces figures, pour des raisons de lisibilité, seule la première structure fibreuse 41 telle que découpée est représenté : il faut alors garder à l'esprit que la deuxième structure fibreuse 42 s'étend derrière cette première structure fibreuse 41 et possède une géométrie sensiblement analogue.

Dans cette première structure fibreuses 41, on reconnait la portion longitudinale principale 46 encadrées par les zones de liaison 43 et 44 qui s'étendent tout le long des extrémités amont et aval de la portion longitudinale principale 46, respectivement.

La première structure fibreuse 41 comprend en outre une portion 52, dite radiale inférieure, qui s'étend depuis le bord inférieur de la portion longitudinale principale jusqu'au bord inférieur de la structure fibreuse 41. Cette portion radiale inférieure 52 comprend en outre une portion de débordement amont 52m qui contourne et s'étend partiellement en avant de la première zone de liaison 43, une découpe 49 séparant cette portion de débordement 52m de la première zone de liaison 43. La portion radiale inférieure 52 comprend également une portion de débordement aval 52v qui contourne et s'étend partiellement en arrière de la deuxième zone de liaison 44, une découpe 49 séparant cette portion de débordement 52v de la deuxième zone de liaison 43.

Lors de la mise en forme de la préforme 40, cette portion radiale 52 est repliée en position radiale de manière à former la partie intrados de la plate-forme inférieure 22.

Cette portion radiale 52 est prolongée en outre, en avant, par une portion longitudinale secondaire amont 54m et, en aval, par une portion longitudinale secondaire aval 54v. Ces dernières sont aptes à être repliées longitudinalement de manière à former les brides de fixation inférieures 24.

De manière analogue, la première structure fibreuse 41 comprend une portion 53, dite radiale supérieure, qui s'étend depuis le bord supérieure de la portion longitudinale principale 46 jusqu'au bord supérieur de la structure fibreuse 41. Cette portion radiale supérieure 53 comprend des portions de débordement amont 53m et aval 53v séparées des zones de liaison 43, 44 par des découpes 49. Cette portion radiale supérieure 53 est apte à être repliée en position radiale de manière à former la partie intrados de la plate-forme supérieure 23.

Cette portion radiale supérieure 53 est prolongée en outre, en avant, par une succession de portions de jonction 59 menant à une portion longitudinale secondaire amont 55m et, en aval, par une portion longitudinale secondaire aval 55v. Ces dernières sont aptes à être repliées longitudinalement de manière à former les brides de fixation supérieures 25.

La préforme 40 peut être humidifiée pour l'assouplir et permettre un décadrage plus aisé des fibres. Elle est alors introduite dans un moule de formage dont l'espace intérieur est ajusté à la géométrie recherchée pour la préforme 40.

La mise en forme du bord d'attaque et du bord de fuite de la préforme 40 sera décrite plus précisément en référence aux FIG 6A et 6B. Ces dernières superposent les géométries de la préforme 40 en pointillés et de la pièce finale 20 en traits forts. Lors de la mise en forme, les portions longitudinales principales 46 et 47 sont écartées l'une de l'autre de manière à ménager un espace 50. Un insert est alors inséré dans cet espace 50 afin que la matrice ne le remplisse pas lors de son injection et de sa solidification, ce qui permettra d'obtenir le creux de paie 30.

Au niveau du bord de fuite 29, les portions longitudinales principales 46 et 47 convergent de manière régulière vers la deuxième portion de liaison 44. La mise en forme est réalisée de manière à ce que le bord de fuite 29 de la pièce finale 20 se situe sur le plan médian 44' de la portion de liaison 44.

En raison de la cambrure de la pale 20, la distance curviligne séparant le bord de fuite 29 du bord d'attaque 28 le long de la paroi extrados 27 est plus grande que la distance curviligne séparant les mêmes bords de fuite 29 et d'attaque 28 le long de la paroi intrados 26, le point d'iso-longueur I depuis le bord de fuite 29 se situant ainsi à quelque distance du bord d'attaque 28 sur la paroi extrados. En revanche, par construction, les portions longitudinales principales 46, 47 des première et deuxième structures fibreuses 41, 42 possèdent la même longueur. Dès lors, si le plan médian 44' de la deuxième portion de liaison 44 passe par le bord de fuite souhaité 29, le plan médian 43' de la première portion de liaison 43 passe par le point d'iso-longueur I et non par le bord d'attaque 28.

La première portion de liaison 43 s'étend donc du côté extrados du plan de corde C, son plan médian 43' formant en outre un angle θ inférieur à 45° et de préférence d'environ 15° avec le plan de corde C.

Au niveau du bord d'attaque 28, la portion longitudinale 46 de la première structure fibreuse 41, du côté intrados, est fléchie de manière à former un coude, sensiblement en forme de S, d'abord convexe puis concave, de manière à former le bord d'attaque 28 puis à rejoindre la deuxième structure fibreuse 42 et la première portion de liaison 43.

La portion longitudinale 47 de la deuxième structure fibreuse 42 converge quant à elle plus régulièrement depuis l'extrados vers la portion de liaison 43.

Lorsque l'on compare le profil de la préforme 40 avec celui de l'aube souhaitée, l'extrémité distale de la première partie de liaison, issue de la portion de liaison 43, forme donc une première excroissance 63 se raccordant au profil souhaité en traits forts par des arcs intrados 68 et extrados 69. Afin d'assurer un démoulage correct, l'arc intrados 68 rejoint le profil souhaité au niveau du bord d'attaque 28. Il en résulte que le point d'inflexion entre les courbures convexe et concave de la première structure fibreuse 41 coïncide avec le bord d'attaque 28 ; de plus, la tangente as niveau de ce point d'inflexion est perpendiculaire au plan de corde C.

La jonction des deux structures fibreuses 41, 42 au niveau de la première portion de liaison 43 forme également une encoche incurvée 67 dans la surface intérieure de l'aube qui définit l'espace 50.

Une fois la mise en forme effectuée à l'aide du moule de formage, la préforme 40 est séchée afin que celle-ci se raidisse, bloquant ainsi la géométrie imposée lors de la mise en forme. La préforme 40 est alors disposée dans un moule injection, aux dimensions de l'aube brute souhaitée 60, dans lequel on injecte une matrice, ici une matrice poreuse d'alumine. Une telle injection peut par exemple être réalisée par le procédé connu LCM (Liquide Composite Moulding). A l'issue de cette étape, après retrait de l'insert, on obtient alors une aube brute 60 en matériau composite composée d'une préforme 40 tissée en fibres d'alumine noyée dans une matrice alumine.

On constate sur la FIG 7 que l'aube brute 60 comprend déjà les plates-formes 22 et 23 ainsi que les brides de fixation 24 et 25 souhaitées. En revanche, la pale 61 de la pièce brute 60 possède des excroissances amont 63 et aval 64 résultant des extrémités distales respectives des parties de liaison issues des portions de liaison amont 43 et aval 44. Ces dernières, également: visibles sur les FIG 6A et 6B doivent être usinées pour obtenir la pale définitive 21.

Au niveau du bord d'attaque 28, l'usinage inclut la découpe de l'excroissance amont 63 et le lissage du bord d'attaque 28 et de la paroi extrados 27 selon le profil souhaité.

Au niveau du bord de fuite 29, l'usinage inclut la découpe de l'excroissance aval 64 et un affinage du bord de fuite de part et d'autre du plan médian 44' de la deuxième portion de liaison 44.

Afin de faciliter l'usinage au niveau de la jonction entre la pale 21 et les plates-formes 22, 23 et d'éviter d'affaiblir la structure de l'aube à cette occasion, les portions de liaisons 43 et 44 possèdent une largeur réduite, environ égale à 5 mm, au niveau de leurs extrémités inférieure et supérieure ; leur largeur est plus importante, environ égale à 10 mm, au niveau du milieu de la pale 21.

D'autres étapes de finition, notamment d'usinage, peuvent éventuellement compléter ce procédé pour finaliser l'aube 20.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Préforme fibreuse pour une aube creuse de turbomachine, comprenant
une première structure fibreuse (41) obtenue par tissage tridimensionnel comportant au moins une portion longitudinale principale (46) apte à former essentiellement une paroi intrados (26) de pale (21),
une deuxième structure fibreuse (42) obtenue par tissage tridimensionnel comportant au moins une portion longitudinale principale apte à former essentiellement une paroi extrados (27) de pale (21),
dans laquelle les première et deuxième structures fibreuses (41, 42) comportent en outre chacune une première zone de liaison (43), s'étendant le long du bord avant de leur portion longitudinale principale respective (46, 47), solidaire l'une de l'autre et formant une première portion de liaison (43) de la préforme (40), et une deuxième zone de liaison (44), s'étendant le long du bord arrière de leur portion longitudinale principale respective (46, 47), solidaire l'une de l'autre et formant une deuxième portion de liaison de la préforme (44), et
dans laquelle les portions longitudinales principales (46, 47) des première et deuxième structures fibreuses (41, 42) sont dissociées de manière à ménager un espace (50) entre lesdites portions longitudinales principales (46) apte à former un creux de pale (30)
dans laquelle les premières zones de liaison (43) des première et deuxième structures fibreuses (41, 42) sont tissées conjointement de manière liée et/ou les deuxièmes zones de liaison (44) des première et deuxième structures fibreuses (41, 42) sont tissées conjointement de manière liée,
dans laquelle les portions longitudinales principales (46) des première et deuxième structures fibreuses (41, 42) sont tissées conjointement de manière déliée,
dans laquelle au moins l'une des structures fibreuses (41) comprend en outre au moins une portion radiale (52, 53), s'étendant depuis le bord inférieur ou supérieur de sa portion longitudinale principale (46), apte à former une plate-forme (22, 23) ou une bride de fixation,
**caractérisée en ce qu'**au moins l'une des portions radiales (52, 53) comprend une portion débordante (52m, 52v, 53m, 53v) qui, lorsque la structure fibreuse (41) est à plat, se situe en avant d'au moins une partie de la première zone de liaison (43) de ladite structure fibreuse (41) ou en arrière d'au moins une partie de la deuxième zone de liaison (44) de ladite structure fibreuse (42), un espace (49) étant laissé entre ladite portion débordante (52m, 52v, 53m, 53v) et la zone de liaison considérée (43, 44).

2. Préforme fibreuse selon la revendication 1, dans laquelle la première et/ou deuxième portion de liaison (43, 44) possède une largeur plus faible au niveau de sa base et/ou de son sommet qu'au niveau de son milieu.

3. Aube creuse, notamment du type Turbine Rear Vane, TRV, **caractérisée en ce qu'**elle est réalisée de manière monobloc en matériau composite à partir d'une préforme fibreuse (40) selon l'une quelconque des revendications précédentes, ladite préforme (40) ayant été mise en forme dans un moule et noyée dans une matrice.

4. Aube creuse selon la revendication 3, dans laquelle la préforme fibreuse est réalisée avec des fibres du type céramique oxyde, de préférence en alumine, mullite, silice ou zircone.

5. Aube creuse selon la revendication 3 ou 4, dans laquelle la matrice est du type céramique oxyde, de préférence en alumine, mullite, silice ou zircone.

6. Turbomachine, **caractérisée en ce qu'**elle comprend une aube creuse (20) selon l'une quelconque des revendications 3 à 5.

7. Procédé de fabrication d'une aube creuse, **caractérisé en ce qu'**il comprend les étapes suivantes :
tissage et découpe d'une préforme fibreuse (40) selon la revendication 1 ou 2,
pliage et mise en forme de la préforme fibreuse (40) dans un moule possédant la géométrie de la pièce brute souhaitée (60),
mise en place d'un insert dans l'espace (50) entre les deux portions longitudinales principales (46, 47),
injection et solidification de la matrice autour de la préforme fibreuse (40) afin d'obtenir la pièce brute (60),
retrait de l'insert, et
usinage des parties de liaison (63, 64) de la pièce brute (60), correspondant aux portions de liaison (43, 44) de la préforme fibreuse, afin d'obtenir les bords d'attaque (28) et de fuite (29) de la pièce finale (20).

8. Procédé selon la revendication 7, dans lequel, au cours de l'étape de mise en forme, la deuxième structure fibreuse (42) est fléchie de manière à présenter entre ses deuxième (44) et première (43) zones de liaison au moins une première courbure concave, apte à former la partie aval de l'intrados (26) de l'aube, suivie d'une courbure convexe, apte à former la partie amont de l'intrados (26) de l'aube, suivie elle-même d'une deuxième courbure concave permettant de rejoindre la première structure fibreuse (41) au niveau de la première zone de liaison (43), une portion distale de la première zone de liaison (43) s'étendant alors du côté extrados du plan de corde (C) défini par les bords d'attaque (28) et de fuite (29) de la pièce finale souhaitée (20).

9. Procédé selon la revendication 8, dans lequel l'étape d'usinage de la première partie de liaison de la pièce brute (60), correspondant à la première portion de liaison (43) de la préforme fibreuse (40), comprend la découpe de la portion distale (63) de la première partie de liaison et le lissage du bord d'attaque (28) et de la paroi extrados (27).

10. Procédé selon l'une quelconque des revendications 7 à 9, dans lequel l'étape d'usinage de la deuxième partie de liaison de la pièce brute (60), correspondant à la deuxième portion de liaison (44) de la préforme fibreuse (40), comprend essentiellement un affinage de ladite deuxième partie de liaison pour obtenir le bord de fuite (29).

## Patentansprüche

1. Faservorformling für eine Hohlschaufel einer Turbomaschine, umfassend
eine erste Faserstruktur (41), die durch dreidimensionales Weben erhalten wird, umfassend mindestens einen länglichen Hauptabschnitt (46), der geeignet ist, im Wesentlichen eine Innenwand (26) eines Flügels (21) zu bilden,
eine zweite Faserstruktur (42), die durch dreidimensionales Weben erhalten wird, umfassend mindestens einen länglichen Hauptabschnitt, der geeignet ist, im Wesentlichen eine Außenwand (27) eines Flügels (21) zu bilden,
wobei die erste und die zweite Faserstruktur (41, 42) ferner jeweils eine erste Verbindungszone (43), die sich entlang des vorderen Randes ihres jeweiligen länglichen Hauptabschnitts (46, 47) erstreckt, die miteinander verbunden sind und einen ersten Verbindungsabschnitt (43) des Vorformlings (40) bilden, und eine zweite Verbindungszone (44) umfassen, die sich entlang des hinteren Randes ihres jeweiligen länglichen Hauptabschnitts (46, 47) erstreckt, die miteinander verbunden sind und einen zweiten Verbindungsabschnitt des Vorformlings (44) bilden, und
wobei die länglichen Hauptabschnitte (46, 47) der ersten und zweiten Faserstrukturen (41, 42) getrennt sind, um einen Raum (50) zwischen den länglichen Hauptabschnitten (46) auszusparen, der geeignet ist, einen Flügelhohlraum (30) zu bilden,
wobei die ersten Verbindungszonen (43) der ersten und zweiten Faserstrukturen (41, 42) auf gebundene Weise gemeinsam gewebt sind, und/oder die zweiten Verbindungszonen (44) der ersten und zweiten Faserstrukturen (41, 42) auf gebundene Weise gemeinsam gewebt sind,
wobei die länglichen Hauptabschnitte (46) der ersten und zweiten Faserstrukturen (41, 42) auf nicht gebundene Weise gemeinsam gewebt sind,
wobei mindestens eine der Faserstrukturen (41) ferner mindestens einen radialen Abschnitt (52, 53) umfasst, der sich vom unteren oder oberen Rand ihres länglichen Hauptabschnitts (46) erstreckt und geeignet ist, eine Plattform (22, 23) oder einen Befestigungsflansch zu bilden,
**dadurch gekennzeichnet, dass** mindestens einer der radialen Abschnitte (52, 53) einen vorstehenden Abschnitt (52m, 52v, 53m, 53v) umfasst, der, wenn die Faserstruktur (41) flach angeordnet ist, vor mindestens einem Teil der ersten Verbindungszone (43) der Faserstruktur (41) oder hinter mindestens einem Teil der zweiten Verbindungszone (44) der Faserstruktur (42) angeordnet ist, wobei ein Raum (49) zwischen dem vorstehenden Abschnitt (52m, 52v, 53m, 53v) und der betreffenden Verbindungszone (43, 44) frei gelassen wird.

2. Faservorformling gemäß Anspruch 1, bei dem der erste und/oder zweite Verbindungsabschnitt (43, 44) eine geringere Breite im Bereich seiner Basis und/oder seiner Spitze als im Bereich seiner Mitte aufweist.

3. Hohlschaufel, insbesondere vom Typ Turbine Rear Vane TRV, **dadurch gekennzeichnet, dass** sie einstückig aus Verbundstoff aus einem Faservorformling (40) gemäß einem der vorhergehenden Ansprüche hergestellt ist, wobei der Vorformling (40) in einer Form geformt und in eine Matrix eingelassen wurde.

4. Hohlschaufel gemäß Anspruch 3, bei der der Faservorformling mit Fasern vom Typ Keramikoxid, vorzugsweise aus Aluminiumoxid, Mullit, Siliziumoxid oder Zirkon, hergestellt ist.

5. Hohlschaufel gemäß Anspruch 3 oder 4, bei der die Matrix vom Typ Keramikoxid, vorzugsweise aus Aluminiumoxid, Mullit, Siliziumoxid oder Zirkon, ist.

6. Turbomaschine, **dadurch gekennzeichnet, dass** sie eine Hohlschaufel (20) gemäß einem der Ansprüche 3 bis 5 umfasst.

7. Verfahren zur Herstellung einer Hohlschaufel, **dadurch gekennzeichnet, dass** es die folgenden Schritte umfasst:
Weben und Ausschneiden eines Faservorformlings (40) gemäß Anspruch 1 oder 2,
Falzen und Formen des Faservorformlings (40) in einer Form, die die Geometrie des gewünschten Rohteils (60) besitzt,
Anordnen eines Einsatzes in dem Raum (50) zwischen den zwei länglichen Hauptabschnitten (46, 47),
Einspritzen und Verfestigen der Matrix um den Faservorformling (40), um das Rohteil (60) zu erhalten,
Entnahme des Einsatzes, und
Bearbeiten der Verbindungsteile (63, 64) des Rohteils (60) entsprechend den Verbindungsabschnitten (43, 44) des Faservorformlings, um die Vorderkante (28) und Hinterkante (29) des endgültigen Teils (20) zu erhalten.

8. Verfahren gemäß Anspruch 7, bei dem während des Formungsschrittes die zweite Faserstruktur (42) gebogen wird, um zwischen ihrer zweiten (44) und ersten (43) Verbindungszone mindestens eine erste konkave Biegung aufzuweisen, die geeignet ist, den stromabwärtigen Teil der Innenseite (26) der Schaufel zu bilden, gefolgt von einer konvexen Biegung, die geeignet ist, den stromaufwärtigen Teil der Innenseite (26) der Schaufel zu bilden, selbst gefolgt von einer zweiten konkaven Biegung, die es ermöglicht, an die erste Faserstruktur (41) im Bereich der ersten Verbindungszone (43) anzuschließen, wobei sich ein distaler Abschnitt der ersten Verbindungszone (43) nun auf der Außenseite der Ebene der Flügeltiefe (C), die durch die Vorderkante (28) und Hinterkante (29) des gewünschten endgültigen Teils (20) definiert ist, erstreckt.

9. Verfahren gemäß Anspruch 8, bei dem der Schritt der Bearbeitung des ersten Verbindungsteils des Rohteils (60) entsprechend dem ersten Verbindungsabschnitt (43) des Faservorformlings (40) das Ausschneiden des distalen Abschnitts (63) aus dem ersten Verbindungsteil und das Glätten der Vorderkante (28) und der Außenwand (27) umfasst.

10. Verfahren gemäß einem der Ansprüche 7 bis 9 bei dem der Schritt der Bearbeitung des zweiten Verbindungsteils des Rohteils (60) entsprechend dem zweiten Verbindungsabschnitt (44) des Faservorformlings (40) im Wesentlichen eine Feinbearbeitung des zweiten Verbindungsteils, um die Hinterkante (29) zu erhalten, umfasst.

## Claims

1. A fiber preform for a hollow turbine engine vane, the preform comprising:
a first fiber structure (41) obtained by three-dimensional weaving and comprising at least one main longitudinal portion (46) suitable essentially for forming a pressure side wall (26) of an airfoil (21);
a second fiber structure (42) obtained by three-dimensional weaving and comprising at least one main longitudinal portion suitable essentially for forming a suction side wall (27) of the airfoil (21);
wherein each of the first and second fiber structures (41, 42) further includes a first interlinking zone (43) extending along the front edge of its main longitudinal portion (46, 47), which first zones are integral with each other and form a first interlinking portion (43) of the preform (40), and a second interlinking zone (44) extending along the rear edge of its main longitudinal portion (46, 47), the second zones being integral with each other and forming a second interlinking portion of the preform (44); and
wherein the main longitudinal portions (46, 47) of the first and second fiber structures (41, 42) are dissociated so as to leave a gap (50) between said main longitudinal portions (46) suitable for forming an airfoil hollow (30);
wherein the first interlinking zones (43) of the first and second fiber structures (41, 42) are woven jointly in interlinked manner and/or the second interlinking zones (44) of the first and second fiber structures (41, 42) are woven jointly in interlinked manner;
wherein the main longitudinal portions (46) of the first and second fiber structures (41, 42) are woven jointly in non-interlinked manner,
wherein at least one of the fiber structures (41) further includes at least one radial portion (52, 53) extending from the bottom or top edge of its main longitudinal portion (46) and suitable for forming a platform (22, 23) or a fastener flange,
**characterized in that** at least one of the radial portions (52,53) includes an overlap portion (52m, 52v, 53m, 53v) that, when the fiber structure (41) is flat, lies in front of at least a portion of the first interlinking zone (43) of said fiber structure (41) or behind at least a portion of the second interlinking zone (44) of said fiber structure (42), a gap (49) being left between said overlap portion (52m, 52v, 53m, 53v) and the interlinking zone (43, 44) in question.

2. A fiber preform according to claim 1, wherein the first and/or second interlinking portion (43, 44) possesses smaller width at its base and/or at its tip than in its middle.

3. A hollow vane, in particular of the Turbine Rear Vane TRV type, **characterized in that** it is made as a single piece of composite material from a fiber preform (40) according to any preceding claim, said preform (40) being shaped in a mold and embedded in a matrix.

4. A hollow vane according to claim 3, wherein the fiber preform is made with fibers of ceramic oxide type, preferably of alumina, mullite, silica, or zirconia.

5. A hollow vane according to claim 3 or claim 4, wherein the matrix is of ceramic oxide type, preferably of alumina, mullite, silica, or zirconia.

6. A turbine engine, **characterized in that** it includes a hollow vane (20) according to any one of claims 3 to 5.

7. A method of fabricating a hollow vane, the method being **characterized in that** it comprises the following steps:
weaving and cutting out a fiber preform (40) according to claim 1 or 2;
folding and shaping the fiber preform (40) in a mold possessing the shape of the desired unfinished blank (60);
placing an insert in the gap (50) between the two main longitudinal portions (46, 47);
injecting and solidifying the matrix around the fiber preform (40) in order to obtain the unfinished blank (60);
removing the insert; and
machining the interlinking parts (63, 64) of the unfinished flank (60) corresponding to the interlinking portions (43, 44) of the fiber preform so as to obtain the leading and trailing edges (28, 29) of the final part (20).

8. A method according to claim 7, wherein, during the shaping step, the second fiber structure (42) is curved so as to present, between its second and first interlinking zones (44, 43), at least a first concave curve suitable for forming the downstream portion of the pressure side (26) of the vane, followed by a convex curve suitable for forming the upstream portion of the pressure side (26) of the vane, itself followed by a second concave curve serving to join with the first fiber structure (41) in the first interlinking zone (43), a distal portion of the first interlinking zone (43) then extending on the suction side of the chord plane (C) defined by the leading and trailing edges (28, 29) of the desired final part (20).

9. A method according to claim 8, wherein the step of machining the first interlinking part of the unfinished blank (60), corresponding to the first interlinking portion (43) of the fiber preform (40), includes cutting away from the distal portion (63) of the first interlinking part and smoothing the leading edge (28) and the suction side wall (27).

10. A method according to any one of claims 7 to 9, wherein the step of machining the second interlinking part of the unfinished blank (60), corresponding to the second interlinking portion (44) of the fiber preform (40), essentially comprises thinning down said second interlinking part in order to obtain the trailing edge (29).
